# EUROPEAN PATENT APPLICATION

(11) **EP 4 350 407 A1**
(43) Date of publication of application: **10.04.2024**
(21) Application number: 21944063.3
(22) Date of filing: 31.05.2021
(51) Int. Cl.: G02B 6/44, G02B 6/46

(54) **OPTICAL FIBER CABLE, OPTICAL FIBER CABLE MANUFACTURING DEVICE, OPTICAL FIBER CABLE MANUFACTURING METHOD, AND OPTICAL FIBER CABLE LAYING METHOD**

(71) Applicant: Nippon Telegraph And Telephone Corporation, Chiyoda-ku Tokyo 100-8116 (JP)
(72) Inventor: KIKUCHI, Masashi, Musashino-shi, Tokyo 180-8585 (JP); TETSUTANI, Shigekatsu, Musashino-shi, Tokyo 180-8585 (JP); YAMADA, Yusuke, Musashino-shi, Tokyo 180-8585 (JP); SAKURAI, Akira, Musashino-shi, Tokyo 180-8585 (JP); TANIOKA, Hiroaki, Musashino-shi, Tokyo 180-8585 (JP)
(74) Representative: v. Bezold & Partner Patentanwälte - PartG mbB
(86) International application number: PCT/JP2021/020752
(87) International publication number: WO 2022/254555

(57) **Abstract**

An object of the present disclosure is to prevent an impression on a side surface of an outer cover of an optical fiber cable from wearing off caused by laying.

In order to achieve the aforementioned object, an optical fiber cable according to the present disclosure includes a cable core having one or a plurality of optical fiber core wires therein; an outer cover which covers the cable core and has a concave portion or a plurality of convex portions for an outer edge of a cross section perpendicular to a long axis direction of the outer cover; and an impression which is marked on the concave portion or on a portion sandwiched between the plurality of convex portions of a side surface of the outer cover.

## Description

### [Technical Field]

The present disclosure relates to an optical fiber cable, an optical fiber cable manufacturing apparatus, an optical fiber cable manufacturing method, and an optical fiber cable laying method.

### [Background Art]

In recent years, in order to cope with increases in traffic demand of communication, increases in capacity of optical fiber transmission systems have progressed (see, for example, NPL 1). In a large-capacity optical transmission system, an allowable signal-to-noise ratio is becoming smaller. Therefore, it is necessary to further reduce the loss of the optical transmission line so that the signal-to-noise ratio can be secured.

Losses of an optical fiber transmission line include a loss generated in an optical fiber cable and a loss generated at a point connecting optical fiber cables. In particular, the latter loss can be expected to be reduced by reducing the number of connecting points on the transmission lines. Reducing the number of connecting points means laying long optical fiber cables. In recent years, an optical fiber cable which realizes a small diameter and a light weight by abolishing a slot rod for housing and protecting an optical fiber has been developed and put into practical use (see, for example, PTL 1). Further, there is a likelihood that a longer optical fiber cable can be laid.

In an optical fiber cable, an impression is marked on a surface of an outer cover to enable a constructor to know the type and the length of the cable that the constructor lays. Since the impression is in contact with an inner wall of a conduit or the like in laying the cable, it is necessary to mark the impression by a method strong enough to keep the impression from wearing off.

### [Citation List]

### [Patent Literature]

[PTL 1] Japanese Patent No. 4774337 (NTT)

### [Non Patent Literature]

[NPL 1] J. Yu and X. Zhou, "Ultra-High-Capacity DWDM transmission systems for 100G and beyond," in IEEE Communications Magazine, vol. 48, No. 3, PP. S56-S64, March 2010, doi: 10.1109/MCOM. 2010.5434379.

### [Summary of Invention]

### [Technical Problem]

Nevertheless, however resistant to abrasion the employed marking method is, there is a likelihood of the impression wearing off where a long optical fiber cable is laid. Therefore, it has been challenging to realize an optical fiber cable, however long the optical fiber cable is, having no fear of the impression wearing off.

In order to solve the above problem, an object of the present disclosure is to prevent an impression, marked on a side surface of an outer cover of an optical fiber cable, from wearing off caused by laying.

### [Solution to Problem]

In order to achieve the above object, in an optical fiber cable of the present disclosure, a concave portion or a plurality of convex portions are provided on an outer edge of a cross section perpendicular to a long axis direction of an outer cover, and an impression is marked on the concave portion or on a portion sandwiched between the plurality of convex portions of the side surface of the outer cover.

Specifically, an optical fiber cable according to the present disclosure includes
a cable core having one or a plurality of optical fiber core wires therein;
an outer cover which covers the cable core and has a concave portion or a plurality of convex portions for an outer edge of a cross section perpendicular to a long axis direction of the outer cover; and
an impression which is marked on the concave portion or on a portion sandwiched between the plurality of convex portions on a side surface of the outer cover.

Specifically, an optical fiber cable manufacturing apparatus according to the present disclosure includes
an outer cover forming unit which covers a cable core, having one or a plurality of optical fiber core wires therein, with an outer cover, and forms a concave portion or a plurality of convex portions for an outer edge of a cross section perpendicular to a long axis direction of the outer cover, for at least a part of the outer cover; and
an impression marking unit which marks an impression on the concave portion or on a portion sandwiched between the plurality of convex portions of a side surface of the outer cover.

Specifically, the present disclosure provides a method for manufacturing an optical fiber cable, the method including: covering a cable core, having one or a plurality of optical fiber core wires therein, with an outer cover;
forming a concave portion or a plurality of convex portions for an outer edge of a cross section perpendicular to a long axis direction of the outer cover, for at least a part of the outer cover; and
marking an impression on the concave portion or on a portion sandwiched between the plurality of convex portions of a side surface of the outer cover.

Specifically, the present disclosure provides a method for laying an optical fiber cable, the method including:
selecting the optical fiber cable from a plurality of optical fiber cables, having different concave portions or a plurality of convex portions, for an outer edge of a cross section perpendicular to a long axis direction of at least a part of an outer cover, in accordance with a radius of curvature of an inner diameter of a cross section perpendicular to a long axis direction of a conduit for laying the optical fiber cable; and laying the selected optical fiber cable on an inner wall of the conduit.

### [Advantageous Effects of Invention]

According to the present disclosure, it is practicable to prevent an impression, marked on the side surface of the outer cover of the optical fiber cable, from wearing off caused by laying.

### [Brief Description of Drawings]

[Fig. 1] Fig. 1 shows an example of a structure of an optical fiber cable according to a first embodiment.
[Fig. 2] Fig. 2 shows an example of a structure of an optical fiber cable according to a first embodiment.
[Fig. 3] Fig. 3 shows examples of a structure of an optical fiber cable according to a first embodiment.
[Fig. 4] Fig. 4 shows an example of a structure of an optical fiber cable according to a first embodiment.
[Fig. 5] Fig. 5 shows an example of a structure of an optical fiber cable according to a first embodiment.
[Fig. 6] Fig. 6 shows an example of a structure of an optical fiber cable according to a first embodiment.
[Fig. 7] Fig. 7 shows an example of a configuration of an optical fiber cable manufacturing apparatus according to a second embodiment.
[Fig. 8] Fig. 8 shows an example of an optical fiber cable laying method according to a third embodiment.

### [Description of Embodiments]

Embodiments of the present disclosure will be described hereinafter in detail with reference to the drawings. It is to be understood that the present disclosure is not limited to the embodiments described below. The embodiments are merely exemplary and the present disclosure can be implemented in various modified and improved modes based on knowledge of those skilled in the art. Constituent elements with the same reference signs in the present specification and in the drawings represent the same constituent elements.

### (First Embodiment)

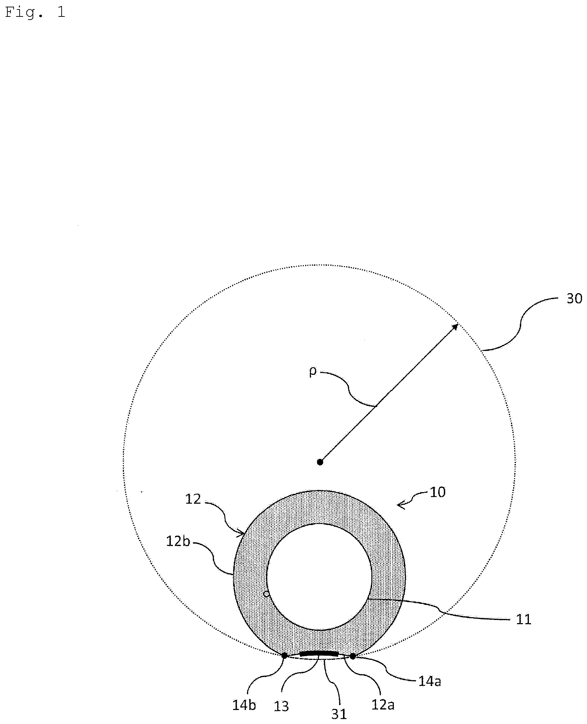

Fig. 1 shows a first embodiment of the present invention. Fig. 1 shows a cross section perpendicular to a long axis direction of an optical fiber cable 10.

The optical fiber cable 10 includes a cable core 11 formed by assembling one or a plurality of coated optical fibers (not shown) therein, and an outer cover 12 that covers the cable core 11.

An outer edge in the cross section perpendicular to the long axis direction of the outer cover 12 may have at least one set of two points 14a and 14b satisfying the following condition. The condition is described below: when the two points 14a and 14b are connected by a shortest curve 31 having a predetermined radius of curvature ρ and the curve 31 is connected to be convex toward the outside of the outer cover 12, the curve 31 is located outside the outer cover 12. That is, the condition is that two points 14a and 14b of the outer edge in the cross section perpendicular to the long axis direction of the outer cover 12 is in contact with the inside of the curve of the radius of curvature ρ.

Here, the radius of curvature ρ may be the radius of curvature of the inner diameter of the cross section perpendicular to the long axis direction of a conduit or the like 30 in which the optical fiber cable 10 is laid. In this regard, since the minimum radius of curvature at which the optical fiber cable 10 can be laid in the conduit or the like 30 is the radius of the optical fiber cable 10, a lower limit of the radius of curvature ρ is the radius of the optical fiber cable 10.

The two points 14a and 14b shown in Fig. 1 can be realized by providing a concave portion or a plurality of convex portions for an outer edge of a cross section perpendicular to the long axis direction of the outer cover 12. Hereinafter, the concave portion is a portion located inside an outer peripheral circle, around the outer cover 12, having the other portion 12b of the outer edge of the outer cover 12 as a circumference, and the two points 14a and 14b located at both ends of the concave portion are in contact with the inside of the curve of the radius of curvature ρ. The convex portions are portions located outside the outer peripheral circle, in the outer cover 12, having the other portion 12b of the outer edge of the outer cover 12 as a circumference. When the optical fiber cable 10 includes the plurality of convex portions, at least two of the plurality of convex portions are in contact with the inside of the curve of the radius of curvature ρ. Fig. 1 shows an example in which the concave portion is formed for the outer edge of a cross section perpendicular to the long axis direction of the outer cover 12. A region sandwiched between the two points 14a and 14b on the surface of the outer cover 12 functions as a surface for impression marking on which the impression 13 is marked.

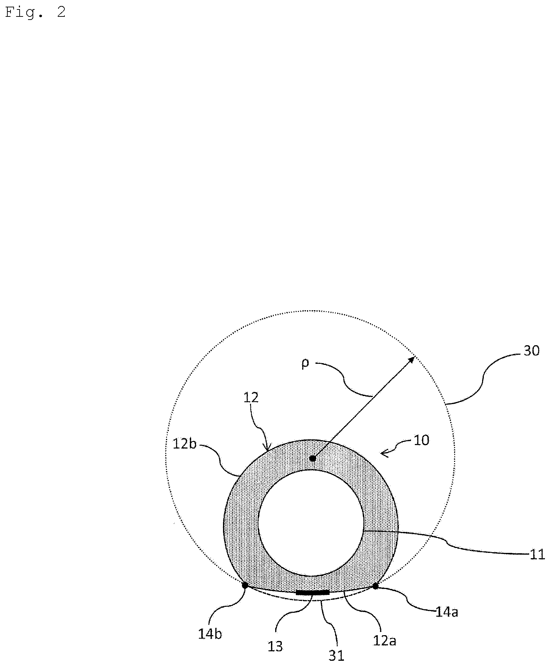

Fig. 2 shows another example in which one portion 12a of the outer edge of a cross section perpendicular to the long axis direction of the outer cover 12 is a concave portion. The optical fiber cable 10 and the conduit or the like 30 shown in Fig. 2 are the same as those shown in Fig. 1, and the shape of the outer cover 12 is different from that shown in Fig. 1.

The center of one portion 12a of the outer edge shown in Fig. 2 is an outward convex curve, and the radius of curvature of the center of one portion 12a of the outer edge is larger than that of the other portion 12b of the outer edge. Further, it is desirable that the radius of curvature of the center of one portion 12a of the outer edge be larger than the radius of curvature ρ.

When the radius of curvature is not defined as one value, the radius of curvature may be defined as a maximum radius of curvature, which is representative therefor. For example, when the conduit or the like 30 has a radius of curvature defined as a plurality of values, the maximum radius of curvature of them is regarded as the radius of curvature ρ, and the radius of curvature of the convex shape at the center of one portion 12a of the outer edge shown in Fig. 2 is set to be larger than the radius of curvature ρ.

When the optical fiber cable 10 is laid on a plane such as a road face instead of in a conduit, the condition imposed on the outer cover 12 is that the two points 14a and 14b of the outer edge of a cross section perpendicular to the long axis direction of the outer cover 12 is in contact with a straight line. In this situation, it is desirable that the center of one portion 12a of the outer edge be a concave portion as shown in Fig. 1.

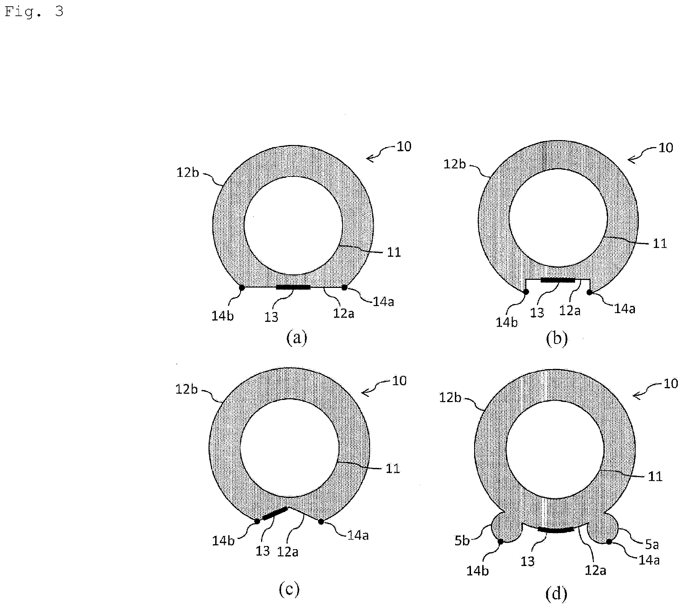

Fig. 3 shows examples of a variation of one portion 12a of the outer edge of a cross section perpendicular to the long axis direction of the outer cover 12.

Fig. 3(a) shows an example in which the concave portion is a linear notch provided for the outer edge of the outer cover 12.

Fig. 3(b) shows an example in which the concave portion is a rectangular notch provided for the outer edge of the outer cover 12.

Fig. 3(c) shows an example in which the concave portion is an L-shaped notch provided for the outer edge of the outer cover 12.

Fig. 3(d) shows an example including two convex portions 5a and 5b for the outer edge of the outer cover 12.

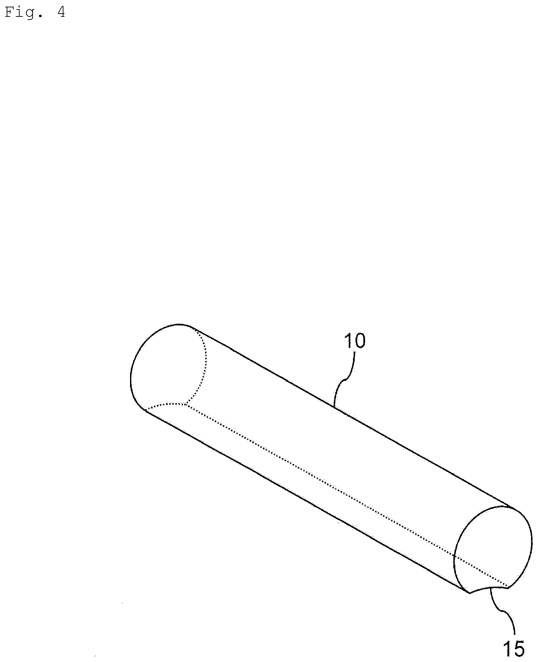

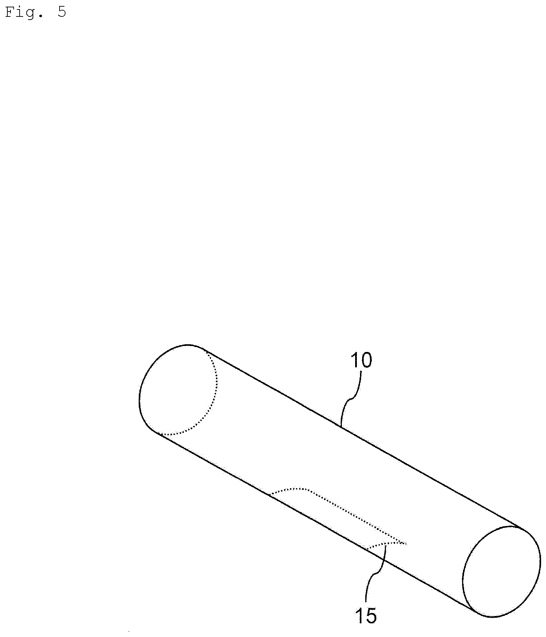

Fig. 4 and Fig. 5 show the entire image of the optical fiber cable 10 according to the present embodiment.

A surface for impression marking 15 may be formed on the entire optical fiber cable 10 from end to end as shown in Fig. 4, or may be formed on only a part of the optical fiber cable 10 as shown in Fig. 5. When the surface for impression marking 15 is formed only on a part of the optical fiber cable 10, it may be formed at a constant interval in the long axis direction.

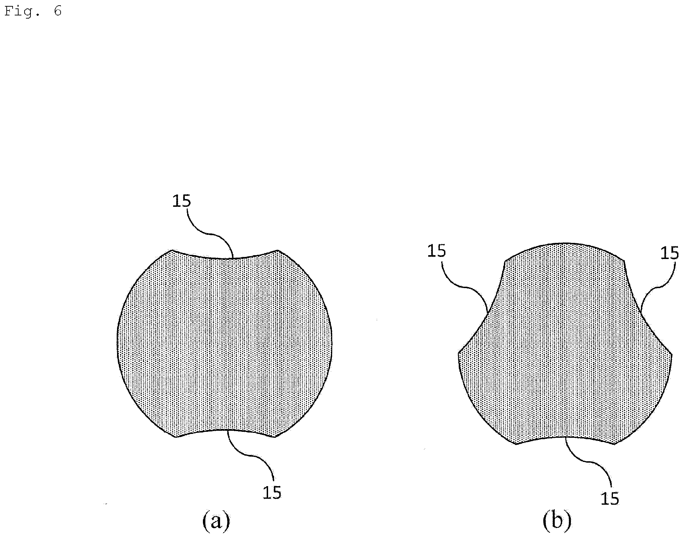

Further, as shown in Fig. 6, a plurality of surfaces for impression marking 15 may be provided on the outer edge of the outer cover 12, and these plurality of surfaces for impression marking 15 may be formed at constant intervals on the outer edge. Although an example in which the surface for impression marking 15 is constituted by one portion 12a of an outer edge whose center is a concave portion is described in Figs. 4, 5 and 6, the embodiment is not limited thereto.

The impression 13 is marked between the two points 14a and 14b on the surface of the outer cover 12, that is, on the surface for impression marking 15. The arrangement of the impression 13 can be any arrangement as long as the impression is marked inside the surface for impression marking 15. For example, the impression 13 may be marked inside the surface for impression marking 15 at a constant interval in the long axis direction or continuously in the long axis direction.

Using such a structure, in laying the optical fiber cable 10 in the conduit or the like 30, the likelihood of the impression 13 coming into contact with the inner wall of the conduit or the like 30 is reduced. Therefore, the impression 13 can be prevented from wearing off.

### (Second Embodiment)

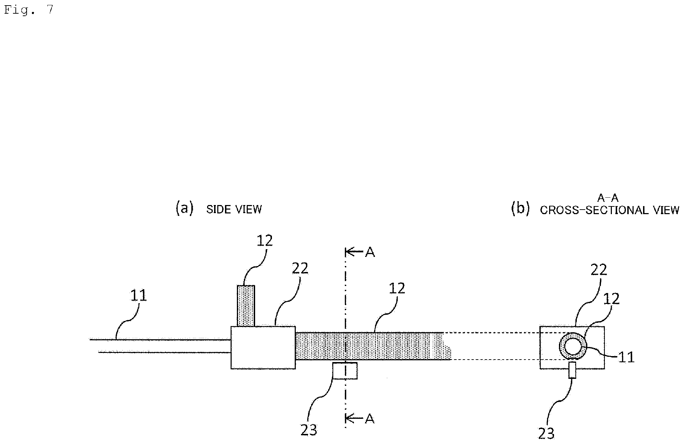

Fig. 7 shows a second embodiment of the present disclosure. Fig. 7(a) shows a side surface of an optical fiber cable manufacturing apparatus 20, and Fig. 7(b) shows a cross section taken along a line A-A in Fig. 7(a).

The optical fiber cable manufacturing apparatus 20 according to the present embodiment is an apparatus for manufacturing an optical fiber cable according to the first embodiment, and includes an outer cover forming unit 22 and an impression marking unit 23.

The outer cover forming unit 22 covers the cable core 11 with the outer cover 12, and produces the surface for impression marking 15 described in the first embodiment on the surface of the outer cover 12.

The impression marking unit 23 marks an impression 13 on the surface for impression marking 15 of the outer cover 12. As shown in Fig. 6, when a plurality of surfaces for impression marking 15 are formed on the outer edge of the cross section perpendicular to the long axis direction of the outer cover 12, the optical fiber cable manufacturing apparatus 20 may include a plurality of impression marking units 23.

The optical fiber cable 10 having the structure described in the first embodiment can be manufactured by the optical fiber cable manufacturing apparatus 20 having the structure described above.

### (Third Embodiment)

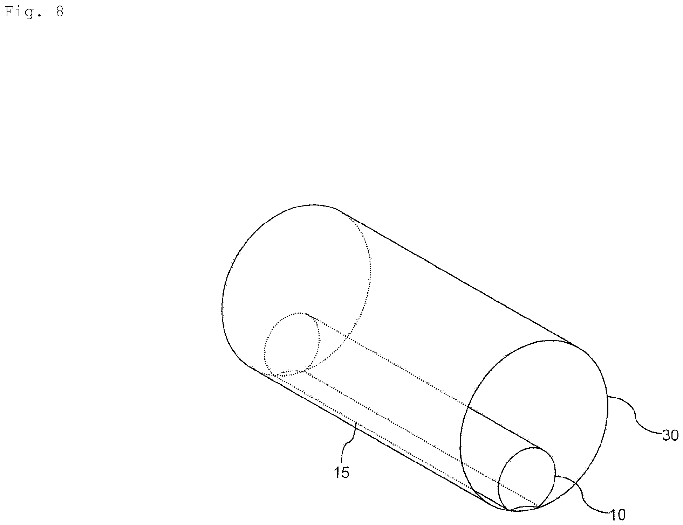

Fig. 8 shows a third embodiment of the present invention. Fig. 8 is a diagram for explaining a method for laying the optical fiber cable 10 in the conduit or the like 30. The conduit or the like 30 and the optical fiber cable 10 are the same as those in the first embodiment.

An method for laying an optical fiber cable according to the present embodiment includes a selecting step and a laying step. In the selecting step, the optical fiber cable 10 is selected from a plurality of optical fiber cables 10 having different kinds of concave portions or convex portions as shown in Figs. 1 to 3 and 6 in accordance with the radius of curvature of the conduit or the like 30 for laying the optical fiber cable 10. For example, when the radius of curvature of the conduit or the like 30 is low, the optical fiber cable 10 in which the center of one portion 12a of the outer edge of the outer cover 12 is convex as shown in Fig. 2 may be selected. In this example, since the thickness of the outer cover 12 can be secured further than that of the optical fiber cable 10 in which the center of one portion 12a of the outer edge is concave, the impression 13 can be prevented from wearing off and the cable core 11 can be protected further. In addition, for example, when it is desired to secure the distance between the surface for impression marking 15 and the inner wall of the conduit or the like 30, the optical fiber cable 10 as shown in Fig. 3(b) or Fig. 3(d) may be selected. When a plurality of abrasions occur on the side surface of the optical fiber cable 10, the optical fiber cable 10 as shown in Fig. 6 may be used.

The method for laying the optical fiber cable according to the present embodiment performs the laying step after performing the selecting step. In the laying step, as shown in Fig. 8, the optical fiber cable 10 selected in the selecting step is laid in the conduit or the like 30.

As described above, by virtue of the method for laying the optical fiber cable according to the present embodiment, even though the optical fiber cable 10 is laid in the conduit or the like 30, the impression 13 is less likely to come into contact with the inner wall of the conduit or the like 30. Therefore, the impression 13 can be prevented from wearing off.

### [Industrial Applicability]

An optical fiber cable, an optical fiber cable manufacturing apparatus, a method for manufacturing an optical fiber cable, and a method for laying an optical fiber cable according to the present disclosure can be applied to an information communication industry.

### [Reference Signs List]

- 5:: Convex portion
- 10:: Optical fiber cable
- 11:: Cable core
- 12:: Outer cover
- 13:: Impression
- 14:: Point
- 15:: Surface for impression marking
- 20:: Optical fiber cable manufacturing apparatus
- 22:: Outer cover forming unit
- 23:: Impression marking unit
- 30:: Conduit or the like
- 31:: Curve

## Claims

1. An optical fiber cable comprising:
a cable core having one or a plurality of optical fiber core wires therein;
an outer cover which covers the cable core and has a concave portion or a plurality of convex portions for an outer edge of a cross section perpendicular to a long axis direction of the outer cover; and
an impression which is marked on the concave portion or on a portion sandwiched between the plurality of convex portions of a side surface of the outer cover.

2. The optical fiber cable according to claim 1,
wherein both ends of the concave portion are or the plurality of convex portions are in contact with the inside of a curve of a predetermined radius of curvature.

3. The optical fiber cable according to claim 2,
wherein the predetermined radius of curvature is a radius of curvature of an inner diameter of a cross section perpendicular to a long axis direction of a conduit in which the optical fiber cable is laid.

4. An optical fiber cable manufacturing apparatus comprising:
an outer cover forming unit which covers a cable core, having one or a plurality of optical fiber core wires therein, with an outer cover, and forms a concave portion or a plurality of convex portions for an outer edge of a cross section perpendicular to a long axis direction of the outer cover, for at least a part of the outer cover; and
an impression marking unit which marks an impression on the concave portion or on a portion sandwiched between the plurality of convex portions of a side surface of the outer cover.

5. A method for manufacturing an optical fiber cable, the method comprising:
covering a cable core, having one or a plurality of optical fiber core wires therein, with an outer cover;
forming a concave portion or a plurality of convex portions for an outer edge of a cross section perpendicular to a long axis direction of the outer cover, for at least a part of the outer cover; and
marking an impression on the concave portion or on a portion sandwiched between the plurality of convex portions of a side surface of the outer cover.

6. A method for laying an optical fiber cable, the method comprising:
selecting an optical fiber cable from a plurality of optical fiber cables, having different concave portions or a plurality of convex portions, for an outer edge of a cross section perpendicular to a long axis direction of at least a part of an outer cover, in accordance with a radius of curvature of an inner diameter of a cross section perpendicular to a long axis direction of a conduit for laying the optical fiber cable; and laying the selected optical fiber cable on an inner wall of the conduit.
